# FASCICULE DE BREVET EUROPEEN

(11) **EP 3 886 660 B1**
(45) Date de publication et mention de la délivrance du brevet: **25.01.2023**
(21) Numéro de dépôt: 19806258.0
(22) Date de dépôt: 25.11.2019
(51) Int. Cl.: A47J 37/12

(54) **ENSEMBLE DE CUISSON COMPRENANT UN APPAREIL ELECTRIQUE DE CUISSON ET UN RECEPTACLE DE VIDANGE**
KOCHANORDNUNG MIT EINEM ELEKTRISCHEN KOCHGERÄT UND EINEM ABLAUFBEHÄLTER
COOKING ASSEMBLY COMPRISING AN ELECTRICAL COOKING APPLIANCE AND A DRAINING RECEPTACLE

(30) Priorité: 30.11.2018 FR 1872133
(43) Date de publication de la demande: 06.10.2021
(73) Titulaire: SEB S.A., 69130 Ecully (FR)
(72) Inventeur: SCHWARTZ, Delphine, 21000 DIJON (FR); PAIN, Frédéric, 21490 VAROIS ET CHAIGNOT (FR); SEURAT, Frédéric, 21490 BRETIGNY (FR)
(74) Mandataire: SEB Développement
(86) Numéro de dépôt international: PCT/EP2019/082440
(87) Numéro de publication internationale: WO 2020/109238

(56) Documents cités:
- EP-A1- 1 504 705
- EP-A1- 2 103 240

## Description

### Domaine technique

La présente invention concerne de manière générale le domaine technique des appareils électriques de cuisson comportant une cuve apte à recevoir un bain de cuisson, ainsi que leurs accessoires.

La présente invention concerne notamment, mais non exclusivement, les friteuses électriques comportant une cuve apte à recevoir un bain d'huile ou de matière grasse, pour frire des aliments, ainsi que leurs accessoires.

La présente invention concerne plus particulièrement un ensemble comprenant un appareil électrique de cuisson comportant une cuve munie d'un dispositif de vidange, ainsi qu'un réceptacle de vidange configuré pour porter l'appareil électrique de cuisson durant l'opération de vidange.

### Technique antérieure

Le document EP1504705 divulgue un appareil de cuisson comportant une cuve munie d'un dispositif de vidange. La cuve peut être disposée sur un réceptacle de vidange pour procéder à la vidange du contenu de la cuve dans le réceptacle de vidange. Le réceptacle de vidange est associé à un couvercle amovible. Le couvercle doit être retiré pour pouvoir procéder à la vidange du contenu de la cuve. Le réceptacle de vidange présente une zone d'appui annulaire prévue pour recevoir la cuve. La zone d'appui est formée par un décrochement de la paroi latérale interne du réceptacle de vidange. Le positionnement de la cuve pour réaliser l'opération de vidange n'est pas très aisé.

### Résumé de l'invention

Un objet de la présente invention est de proposer un ensemble de cuisson comprenant un appareil électrique de cuisson et un réceptacle de vidange, dont l'utilisation soit sûre.

Un autre objet de la présente invention est de proposer un ensemble de cuisson comprenant un appareil électrique de cuisson et un réceptacle de vidange, dont la construction soit économique.

Un autre objet de la présente invention est de proposer un ensemble de cuisson comprenant un appareil électrique de cuisson et un réceptacle de vidange, dont l'encombrement soit limité.

Ces objets sont atteints avec un ensemble de cuisson comprenant un appareil électrique de cuisson et un réceptacle de vidange, l'appareil électrique de cuisson comportant une cuve apte à recevoir un bain de cuisson, la cuve étant munie d'un dispositif de vidange comprenant un clapet susceptible d'occuper une position de rappel stable fermée et une position ouverte, le réceptacle de vidange présentant un organe de commande, l'ensemble de cuisson présentant une configuration de vidange dans laquelle le réceptacle de vidange porte l'appareil électrique de cuisson et dans laquelle l'organe de commande déplace le clapet en position ouverte, du fait que le réceptacle de vidange comporte des appuis supérieurs appartenant à des piliers issus d'une paroi latérale du réceptacle de vidange et que l'appareil électrique de cuisson repose sur les appuis supérieurs lorsque l'ensemble de cuisson présente la configuration de vidange. Cette disposition permet de rigidifier la paroi latérale du réceptacle de vidange portant l'appareil électrique de cuisson, ce qui contribue à améliorer la stabilité de l'appareil électrique de cuisson porté par le réceptacle de vidange. Cette disposition permet également de réduire l'encombrement de l'ensemble de cuisson.

Avantageusement alors, le réceptacle de vidange présente un fond de réceptacle et chacun des appuis supérieurs est issu du fond de réceptacle. Cette disposition contribue à simplifier la réalisation du réceptacle de vidange. Cette disposition permet aussi d'améliorer la rigidité de ces appuis supérieurs.

Avantageusement encore, le réceptacle de vidange présente deux côtés opposés et au moins certains des piliers sont issus de l'un des côtés opposés. Cette disposition contribue à limiter l'encombrement du réceptacle de vidange et à simplifier la réalisation du réceptacle de vidange.

Avantageusement alors, tous les piliers sont issus des côtés opposés. Cette disposition permet d'obtenir une bonne rigidification de la paroi latérale du réceptacle de vidange portant l'appareil électrique de cuisson.

Avantageusement encore, le réceptacle de vidange présente une configuration allongée selon une direction et les deux côtés opposés s'étendent selon ladite direction. Cette disposition contribue à limiter l'encombrement du réceptacle de vidange.

Avantageusement encore, l'appareil électrique de cuisson présente des appuis inférieurs espacés les uns des autres et configurés pour reposer sur un plan d'appui. Cette disposition permet de faciliter la manipulation de l'appareil électrique de cuisson.

Avantageusement alors, l'appareil électrique de cuisson présente des zones de support reposant sur les appuis supérieurs lorsque l'ensemble de cuisson présente la configuration de vidange, et les zones de support sont distinctes des appuis inférieurs. Cette disposition permet d'éviter que les appuis inférieurs de l'appareil électrique de cuisson ne rentrent en contact avec le réceptacle de vidange.

Avantageusement alors, lorsque les appuis inférieurs reposent sur un plan d'appui, les zones de support s'étendent à distance dudit plan d'appui. Cette disposition permet d'éviter un contact des zones de support avec le plan d'appui sur lequel repose l'appareil.

Selon une forme de réalisation, l'appareil électrique de cuisson comporte un boîtier extérieur logeant la cuve, et le boîtier extérieur repose sur le réceptacle de vidange lorsque l'ensemble de cuisson présente la configuration de vidange. En alternative, l'appareil électrique de cuisson pourrait être dépourvu de boîtier extérieur logeant la cuve, la cuve pouvant alors reposer sur le réceptacle de vidange lorsque l'ensemble de cuisson présente la configuration de vidange.

Avantageusement alors, le boîtier extérieur forme une jupe. En d'autres termes, le boîtier extérieur est dépourvu de fond de boîtier. Cette disposition permet de simplifier la réalisation du boîtier extérieur.

Avantageusement alors, les appuis inférieurs sont agencés sous la jupe.

Avantageusement alors, les zones de support (6a, 6b, 6c, 6d) sont agencées sous la jupe.

### Brève description des dessins

L'invention sera mieux comprise à l'étude d'un exemple de réalisation, pris à titre nullement limitatif, illustré dans les figures 1 à 15 annexées, et de variantes.
La figure 1 représente un exemple de réalisation d'un ensemble de cuisson selon l'invention, comprenant un appareil électrique de cuisson et un réceptacle de vidange, représenté en élévation, l'appareil électrique de cuisson étant représenté de manière éclatée, le réceptacle de vidange portant un couvercle de réceptacle, le réceptacle de vidange et le couvercle de réceptacle formant un socle de vidange.
La figure 2 représente en perspective et en éclaté l'appareil électrique de cuisson et le réceptacle de vidange de l'ensemble de cuisson illustré sur la figure 1, le couvercle de réceptacle étant également représenté en éclaté.
La figure 3 est une vue de côté de l'appareil électrique de cuisson illustré sur les figures 1 et 2.
La figure 4 est une vue en perspective de dessous de l'appareil électrique de cuisson illustré sur les figures 1, 2 et 3.
La figure 5 est une vue en perspective et en éclaté du socle de vidange illustré sur les figures 1 et 2.
La figure 6 est une vue en perspective assemblée du socle de vidange illustré sur les figures 1, 2 et 5.
La figure 7 est une vue en perspective de dessus d'un réceptacle de vidange appartenant au socle de vidange illustré sur les figures 1, 2, 5 et 6.
La figure 8 est une vue en perspective de dessous d'un couvercle de réceptacle appartenant au socle de vidange illustré sur les figures 1, 2, 5 et 6.
La figure 9 est une vue en élévation et en coupe transversale de l'ensemble de cuisson illustré sur les figures 1 et 2, dans une configuration de vidange correspondant à une configuration de vidange recommandée dans laquelle le couvercle de réceptacle est utilisé pour fermer le réceptacle de vidange.
La figure 10 est une vue de dessous de l'ensemble de cuisson illustré sur les figures 1, 2 et 9, dans la configuration de vidange correspondant à la configuration de vidange recommandée.
La figure 11 est une vue en élévation et en coupe transversale de l'ensemble de cuisson illustré sur les figures 1, 2, 9 et 10, dans la configuration de vidange correspondant à la configuration de vidange recommandée.
La figure 12 est une vue en élévation et en coupe transversale de l'ensemble de cuisson illustré sur les figures 1, 2, 9, 10, 11, dans une configuration de vidange correspondant à une configuration de vidange alternative, dans laquelle le couvercle de réceptacle n'est pas utilisé.
La figure 13 représente en perspective une configuration de rangement dans laquelle deux socles de vidange illustrés sur les figures 1, 2, 5 et 6 sont empilés.
La figure 14 est une première vue en coupe longitudinale des socles de vidange empilés illustrés sur la figure 13.
La figure 15 est une deuxième vue en coupe longitudinale des socles de vidange empilés illustrés sur les figures 13 et 14.

### Description des modes de réalisation

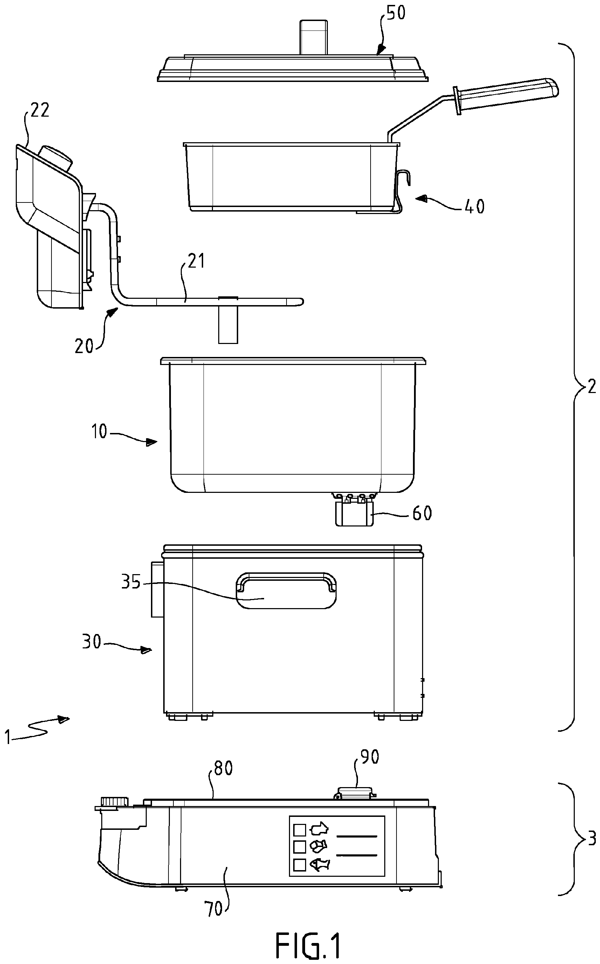

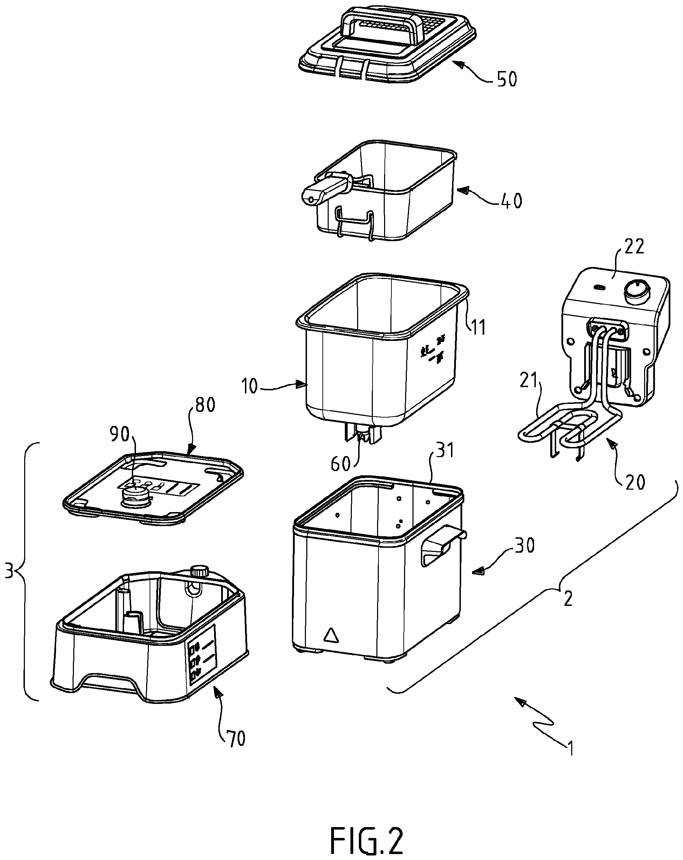

L'ensemble de cuisson 1 illustré sur les figures 1 et 2 comprend un appareil électrique de cuisson 2 et un réceptacle de vidange 70. Le réceptacle de vidange 70 est configuré pour porter l'appareil électrique de cuisson 2. Le réceptacle de vidange 70 peut être utilisé avec un couvercle de réceptacle 80 pour former un socle de vidange 3. Un bouchon de couvercle 90 est monté sur le couvercle de réceptacle 80.

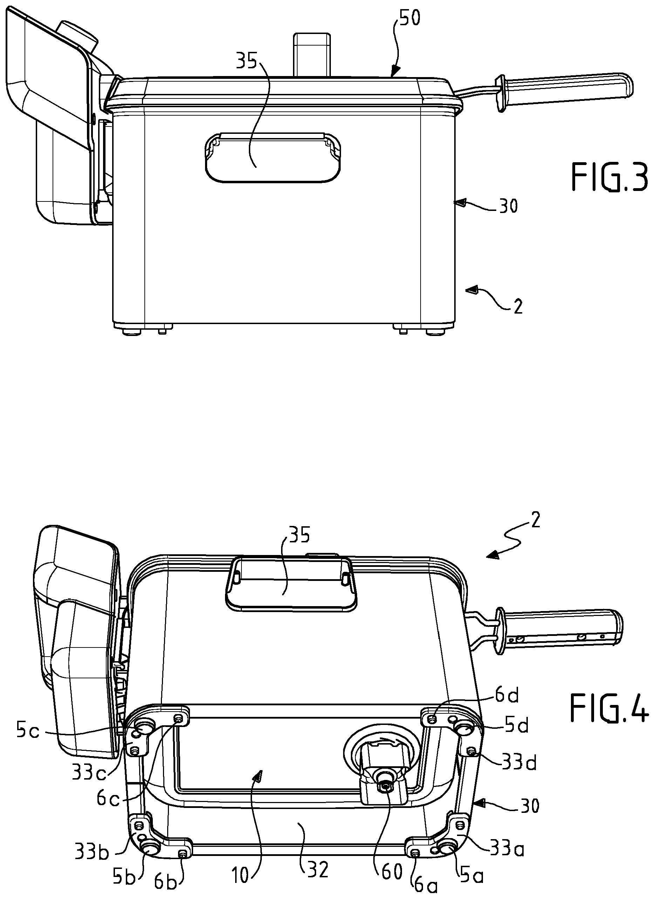

Tel que visible sur la figure 4, l'appareil électrique de cuisson 2 présente des appuis inférieurs 5a, 5b, 5c, 5d espacés les uns des autres. Les appuis inférieurs 5a, 5b, 5c, 5d sont configurés pour reposer sur un plan d'appui.

L'appareil électrique de cuisson 2 comporte une cuve 10 apte à recevoir un bain de cuisson. La cuve 10 est munie d'un dispositif de vidange 60 visible sur les figures 1, 2, 4, 9, 11 et 12.

L'appareil électrique de cuisson 2 comporte un dispositif électrique de chauffe 20. Dans l'exemple de réalisation illustré sur les figures 1 et 2, le dispositif électrique de chauffe 20 est prévu pour chauffer directement le bain de cuisson. A cet effet, le dispositif électrique de chauffe 20 comprend une résistance électrique 21 configurée pour être immergée dans un bain de cuisson contenu dans la cuve 10. Le dispositif électrique de chauffe 20 comprend aussi un boîtier de commande 22 sur lequel est monté la résistance électrique 21. Lorsque la résistance électrique 21 s'étend à l'intérieur de la cuve 10, le boîtier de commande 22 s'étend à l'extérieur de la cuve 10. En alternative ou en complément, le dispositif électrique de chauffe 20 pourrait notamment être configuré pour chauffer la cuve 10. Le dispositif électrique de chauffe 20 peut alors être fixé à la cuve 10, ou être amovible par rapport à la cuve 10. Le dispositif électrique de chauffe 20 peut être associé à un dispositif de contrôle de la température et à un dispositif de sécurité thermique, non représentés sur les figures. Le dispositif de contrôle de la température est par exemple un thermostat. Le dispositif de sécurité thermique est par exemple un fusible thermique ou un limiteur thermique réarmable. A titre de variante, le dispositif électrique de chauffe peut être configuré pour chauffer la cuve sans être immergé dans le bain de cuisson contenu dans la cuve. Le dispositif électrique de chauffe n'est alors pas nécessairement fixé à la cuve.

L'appareil électrique de cuisson 2 peut comporter un boîtier extérieur 30 logeant la cuve 10. Tel que mieux visible sur les figures 4, 9 et 10, le boîtier extérieur 30 forme une jupe 32. La jupe 32 présente quatre côtés. Le boîtier extérieur 30 comporte des pieds de boîtier 33a, 33b, 33c, 33d indépendants, mieux visibles sur la figure 4. Selon la réalisation illustrée sur les figures, les pieds de boîtier 33a, 33b, 33c, 33d sont agencés dans les angles inférieurs du boîtier extérieur 30 et s'étendent selon deux directions sous les côtés de la jupe. Ainsi les pieds de boîtier 33a, 33b, 33c, 33d présentent une forme en L. Les appuis inférieurs 5a, 5b, 5c, 5d sont agencés sous les pieds de boîtier 33a, 33b, 33c, 33d.

Tel que représenté sur les figures 1 et 2, la cuve 10 est montée amovible dans le boîtier extérieur 30. Le boîtier extérieur 30 peut présenter des organes de préhension 35, notamment deux poignées supérieures opposées. Selon une forme de réalisation usuelle, la cuve 10 présente un rebord extérieur 11 configuré pour reposer sur un bord supérieur 31 du boîtier extérieur 30, tel que mieux visible sur la figure 2. En alternative, la cuve 10 pourrait notamment être fixée au boîtier extérieur 30, ou l'appareil électrique de cuisson 2 pourrait notamment être dépourvu de boîtier extérieur 30.

L'appareil électrique de cuisson 2 peut comporter un panier 40 configuré pour contenir des aliments immergés dans un bain de cuisson contenu dans la cuve 10.

L'appareil électrique de cuisson 2 peut comporter un couvercle d'appareil 50 prévu pour couvrir la cuve 10. Si désiré, le couvercle d'appareil 50 peut être configuré pour être utilisé en configuration d'utilisation. En alternative le couvercle d'appareil 50 peut être configuré pour être utilisé seulement en configuration de rangement.

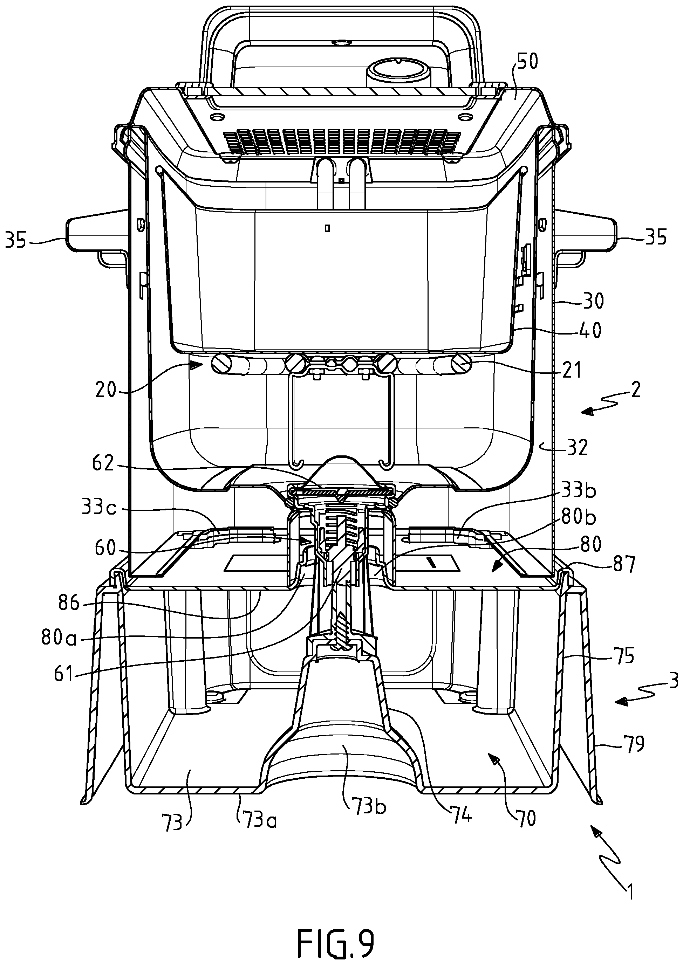

Le dispositif de vidange 60 comprend un clapet 61, mieux visible sur la figure 9. Le dispositif de vidange 60 est de préférence monté dans le fond de la cuve 10. Si désiré un clapet thermostatique 62 peut être agencé en amont du clapet 61, pour empêcher la vidange du bain de cuisson si la température de cuisson est trop élevée.

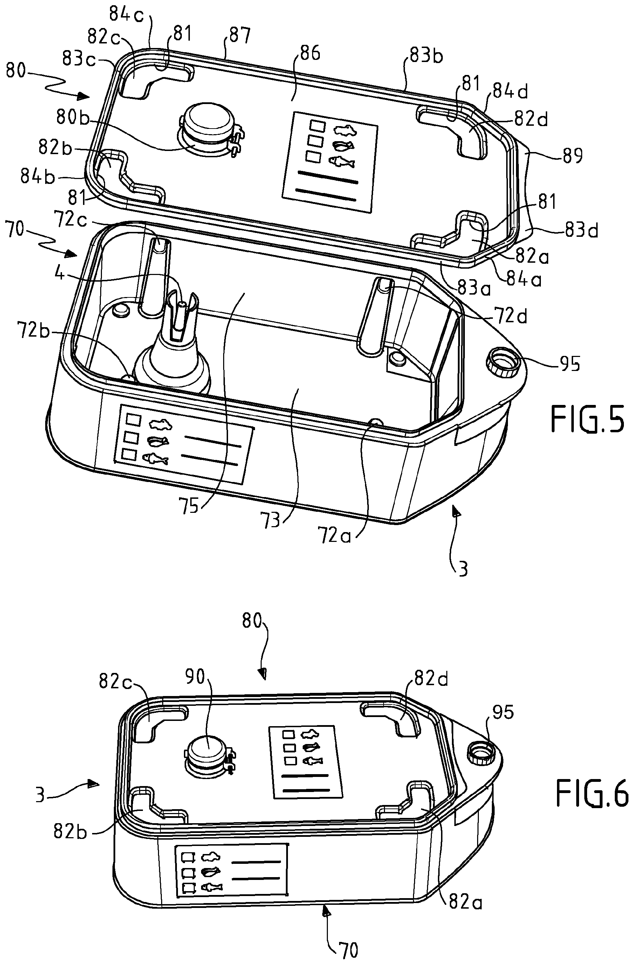

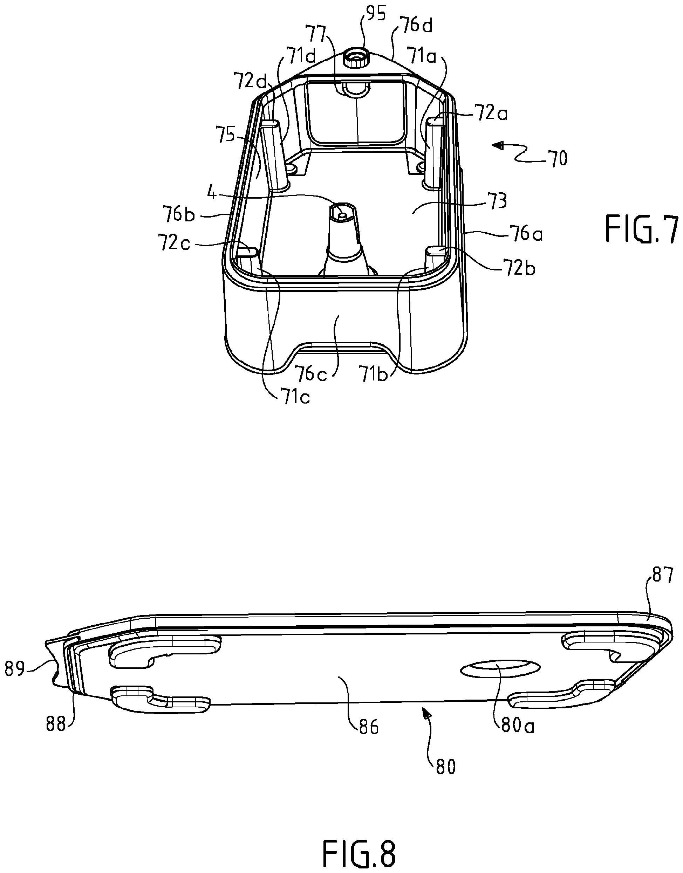

Le réceptacle de vidange 70 présente un organe de commande 4, mieux visible sur les figures 5 et 7. L'organe de commande 4 est prévu pour actionner le clapet 61. Le clapet 61 est susceptible d'occuper une position de rappel stable fermée, en l'absence d'action extérieure, pour contenir le bain de cuisson dans la cuve 10, et une position ouverte, pour permettre la vidange du bain de cuisson, lorsque le clapet 61 est repoussé par l'organe de commande 4, tel que représenté sur les figures 9, 11 et 12. Ainsi l'organe de commande 4 est configuré pour déplacer le clapet 61 en position ouverte lorsque le réceptacle de vidange 70 porte l'appareil électrique de cuisson 2.

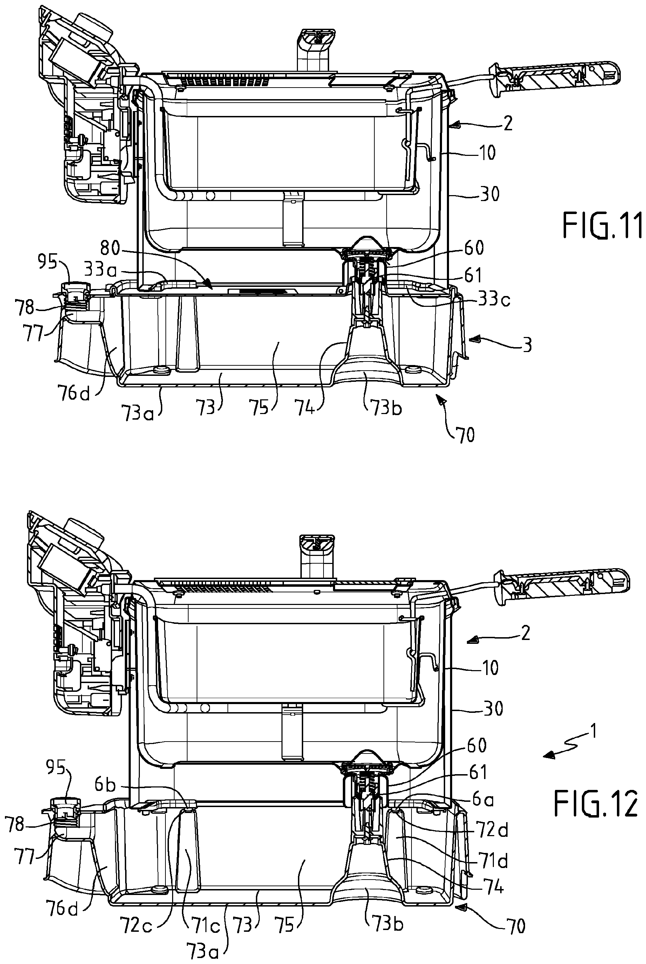

Tel que visible sur les figures 5 et 7, le réceptacle de vidange 70 présente un fond de réceptacle 73 et une paroi latérale 75 s'élevant depuis le fond de réceptacle 73. Le réceptacle de vidange 70 présente une configuration allongée selon une direction. Le réceptacle de vidange 70 présente deux côtés 76a, 76b opposés. Les deux côtés 76a, 76b opposés s'étendent selon ladite direction. Un troisième côté 76c est agencé perpendiculairement aux deux côtés 76a, 76b. Un quatrième côté 76d s'étend à l'opposé du troisième côté 76c. La paroi latérale 75 ménage un conduit 77 débouchant dans une ouverture de versement 78, tel que mieux visible sur les figures 11 et 12. Le conduit 77 est agencé dans le quatrième côté 76d. Un bouchon de réceptacle 95 obture l'ouverture de versement 78. Le réceptacle de vidange 70 comporte une paroi périphérique extérieure 79 entourant la paroi latérale 75, mieux visible sur la figure 9. La paroi périphérique extérieure 79 s'étend à distance d'une partie inférieure de la paroi latérale 75 du réceptacle de vidange 70.

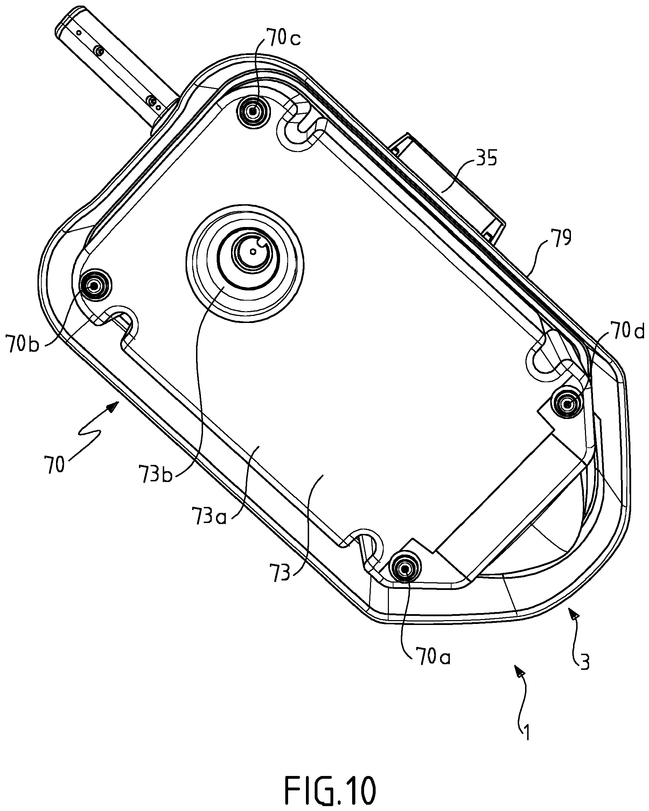

Tel que mieux visible sur les figures 9 et 10, le réceptacle de vidange 70 présente une face inférieure 73a comportant un logement 73b. Ainsi le logement 73b est agencé sous le fond de réceptacle 73. Tel que visible sur la figure 9, l'organe de commande 4 est issu de la face inférieure 73a du réceptacle de vidange 70 et le logement 73b s'étend en dessous de l'organe de commande 4.

Tel que mieux visible sur la figure 7, le réceptacle de vidange 70 comporte des appuis supérieurs 72a, 72b, 72c, 72d. Plus particulièrement, les appuis supérieurs 72a, 72b, 72c, 72d sont issus de la paroi latérale 75 du réceptacle de vidange 70. Les appuis supérieurs 72a, 72b, 72c, 72d appartiennent à des piliers 71a, 71b, 71c, 71d s'étendant depuis le fond de réceptacle 73. Les piliers 71a, 71b, 71c, 71d sont issus de la paroi latérale 75. Chacun des appuis supérieurs 72a, 72b, 72c, 72d est issu du fond de réceptacle 73. Tous les piliers 71a, 71b, 71c, 71d sont issus des côtés 76a, 76b opposés.

A titre de variante, au moins certains des piliers 71a, 71b, 71c, 71d pourraient être issus de l'un des côtés 76a, 76b opposés.

Tel que mieux visible sur la figure 10, le réceptacle de vidange 70 comporte des pieds de réceptacle 70a, 70b, 70c, 70d espacés les uns des autres.

Dans l'exemple de réalisation illustré sur les figures, l'organe de commande 4 est issu du réceptacle de vidange 70. Plus particulièrement, l'organe de commande 4 est issu du fond de réceptacle 73. L'organe de commande 4 est agencé à distance de la paroi latérale 75. Tel que mieux visible sur les figures 5, 7, 9, 11, 12 et 15, le fond de réceptacle 73 présente une protubérance 74 ménageant le logement 73b. Tel que mieux visible sur la figure 9, l'organe de commande 4 est formé par une pièce rapportée montée sur la protubérance 74.

Le couvercle de réceptacle 80 est configuré pour être monté sur le réceptacle de vidange 70. Le couvercle de réceptacle 80 ménage un passage 80a pour l'écoulement du bain de cuisson dans le réceptacle de vidange 70 lorsque le couvercle de réceptacle 80 est en place sur le réceptacle de vidange 70 pour former le socle de vidange 3 et que le socle de vidange 3 porte l'appareil électrique de cuisson 2. Ainsi lorsque le couvercle de réceptacle 80 est monté sur le réceptacle de vidange 70, le couvercle de réceptacle 80 ferme le réceptacle de vidange 70, à l'exception du passage 80a. Le couvercle de réceptacle 80 présente une bordure périphérique 87 présentant un logement inférieur 88, tel que mieux visible sur la figure 8. La bordure périphérique 87 présente une languette externe 89 destinée à faciliter le retrait du couvercle de réceptacle 80 du réceptacle de vidange 70. Le couvercle de réceptacle 80 présente une cheminée 80b s'élevant au-dessus d'une paroi d'obturation 86, tel que visible sur la figure 9. La paroi d'obturation 86 est entourée par la bordure périphérique 87. Plus particulièrement dans l'exemple de réalisation illustré sur les figures, la cheminée 80b ménage le passage 80a.

Le bouchon de couvercle 90 est prévu pour fermer le passage 80a. Dans l'exemple de réalisation illustré sur les figures, le bouchon de couvercle 90 est monté mobile sur le couvercle de réceptacle 80 entre une position de vidange, dans laquelle le passage 80a est libre, non représentée sur les figures, et une position de conservation, dans laquelle le passage 80a est obturé par le bouchon de couvercle 90, représentée sur les figures 1, 2, 5 et 6. Plus particulièrement dans l'exemple de réalisation illustré sur les figures, le bouchon de couvercle 90 est monté pivotant sur le couvercle de réceptacle 80. Le bouchon de couvercle 90 est porté par la cheminée 80b. Si désiré, le bouchon de couvercle 90 peut être amovible par rapport au couvercle de réceptacle 80. Tel que représenté sur les figures 9, 11 et 12, le bouchon de couvercle 90 a été retiré du couvercle de réceptacle 80. Le bouchon de couvercle 90 obture le passage 80a lorsque le socle de vidange 3 est en configuration de stockage du bain de cuisson contenu dans le réceptacle de vidange 70, tel que représenté sur la figure 6.

Sur les figures 9, 11 et 12, l'ensemble de cuisson 1 présente une configuration de vidange dans laquelle l'organe de commande 4 déplace le clapet 61 en position ouverte.

Sur les figures 9 et 11, la configuration de vidange correspond à une configuration de vidange recommandée, dans laquelle le socle de vidange 3 porte l'appareil électrique de cuisson 2. Lorsque l'ensemble de cuisson 1 présente cette configuration de vidange, l'appareil électrique de cuisson 2 repose sur le couvercle de réceptacle 80. Plus particulièrement dans l'exemple de réalisation illustré, le boîtier extérieur 30 repose sur le couvercle de réceptacle 80 lorsque l'ensemble de cuisson 1 présente cette configuration de vidange.

Le couvercle de réceptacle 80 comporte des butées latérales 81, mieux visibles sur la figure 5. Les butées latérales 81 sont configurées pour limiter les mouvements latéraux de l'appareil électrique de cuisson 2 reposant sur le couvercle de réceptacle 80. Plus particulièrement, les butées latérales 81 sont entourées par la bordure périphérique 87.

Le couvercle de réceptacle 80 présente une face supérieure comportant des dépressions 82a, 82b, 82c, 82d. Les butées latérales 81 sont formées par des parois latérales des dépressions 82a, 82b, 82c, 82d.

Le couvercle de réceptacle 80 présente quatre côtés principaux 83a, 83b, 83c, 83d. Chacune des dépressions 82a, 82b, 82c, 82d est agencée dans un angle 84a, 84b, 84c, 84d défini par deux côtés principaux 83a, 83b, 83c, 83d adjacents, en l'occurrence les côtés principaux 83a, 83d pour l'angle 84a, les côtés principaux 83a, 83c pour l'angle 84b, les côtés principaux 83c, 83b pour l'angle 84c, les côtés principaux 83b, 83d pour l'angle 84d, tel que bien visible sur la figure 5. L'un des côtés principaux 83a, 83b, 83c, 83d présente plusieurs pans.

A titre de variante, le couvercle de réceptacle 80 pourrait présenter plusieurs côtés principaux 83a, 83b, 83c, 83d, et l'une au moins des dépressions 82a, 82b, 82c, 82d pourrait être agencée dans un angle 84a, 84b, 84c, 84d défini par deux côtés principaux 83a, 83b, 83c, 83d adjacents.

A titre de variante, le couvercle de réceptacle 80 pourrait présenter une face supérieure comportant au moins une dépression, les butées latérales étant formées par des parois latérales de la dépression. Si désiré ladite dépression peut notamment être annulaire ou alvéolée.

Tel que partiellement visible sur les figures 9 et 11, les pieds de boîtier 33a, 33b, 33c, 33d indépendants sont configurés pour reposer sur le couvercle de réceptacle 80 lorsque l'ensemble de cuisson 1 présente la configuration de vidange. Plus particulièrement, les pieds de boîtier 33a, 33b, 33c, 33d reposent dans les dépressions 82a, 82b, 82c, 82d lorsque l'ensemble de cuisson 1 présente la configuration de vidange.

Les appuis supérieurs 72a, 72b, 72c, 72d s'étendent sous le couvercle de réceptacle 80 lorsque le couvercle de réceptacle 80 ferme le réceptacle de vidange 70. Tel que visible sur la figure 5, les appuis supérieurs 72a, 72b, 72c, 72d sont agencés en dessous des dépressions 82a, 82b, 82c, 82d. Lorsque l'appareil électrique de cuisson 2 repose sur le couvercle de réceptacle 80, les appuis inférieurs 5a, 5b, 5c, 5d sont agencés à l'aplomb des appuis supérieurs 72a, 72b, 72c, 72d.

Sur la figure 12, la configuration de vidange correspond à une configuration alternative, dans laquelle le réceptacle de vidange 70 porte l'appareil électrique de cuisson 2. L'appareil électrique de cuisson 2 repose sur les appuis supérieurs 72a, 72b, 72c, 72d lorsque l'ensemble de cuisson 1 présente cette configuration de vidange. Plus particulièrement dans l'exemple de réalisation illustré, le boîtier extérieur 30 repose sur le réceptacle de vidange 70 lorsque l'ensemble de cuisson 1 présente cette configuration de vidange.

L'appareil électrique de cuisson 2 présente des zones de support 6a, 6b, 6c, 6d, visibles sur la figure 4. Lorsque les appuis inférieurs 5a, 5b, 5c, 5d reposent sur un plan d'appui, les zones de support 6a, 6b, 6c, 6d s'étendent à distance dudit plan d'appui. Lorsque l'ensemble de cuisson 1 présente la configuration de vidange, les zones de support 6a, 6b, 6c, 6d reposent sur les appuis supérieurs 72a, 72b, 72c, 72d tel que partiellement visible sur la figure 12. Plus particulièrement dans l'exemple de réalisation illustré, les appuis inférieurs 5a, 5b, 5c, 5d sont agencés sous la jupe 32, et les zones de support 6a, 6b, 6c, 6d sont agencées sous la jupe 32. Les zones de support 6a, 6b, 6c, 6d sont issues des pieds de boîtier 33a, 33b, 33c, 33d. Les zones de support 6a, 6b, 6c, 6d sont distinctes des appuis inférieurs 5a, 5b, 5c, 5d.

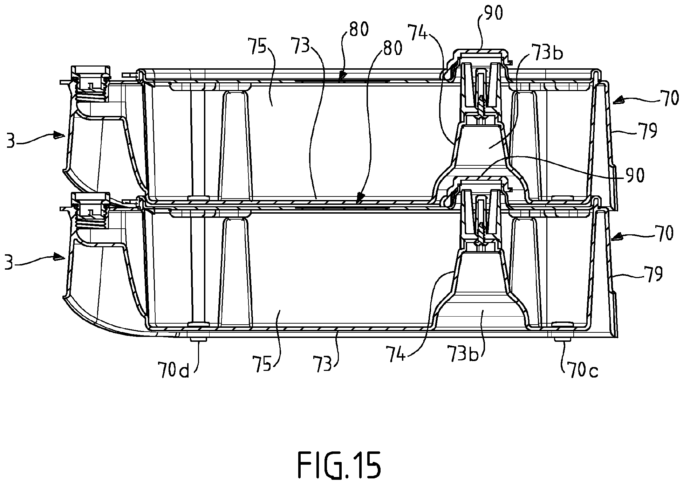

Le réceptacle de vidange 70 et le couvercle de réceptacle 80 peuvent occuper une configuration d'empilement dans laquelle le réceptacle de vidange 70 repose sur le couvercle de réceptacle 80 et dans laquelle le logement 73b loge le bouchon de couvercle 90 fermant le passage 80a du couvercle de réceptacle 80, tel que visible sur la figure 15 illustrant deux socles de vidange 3 superposés.

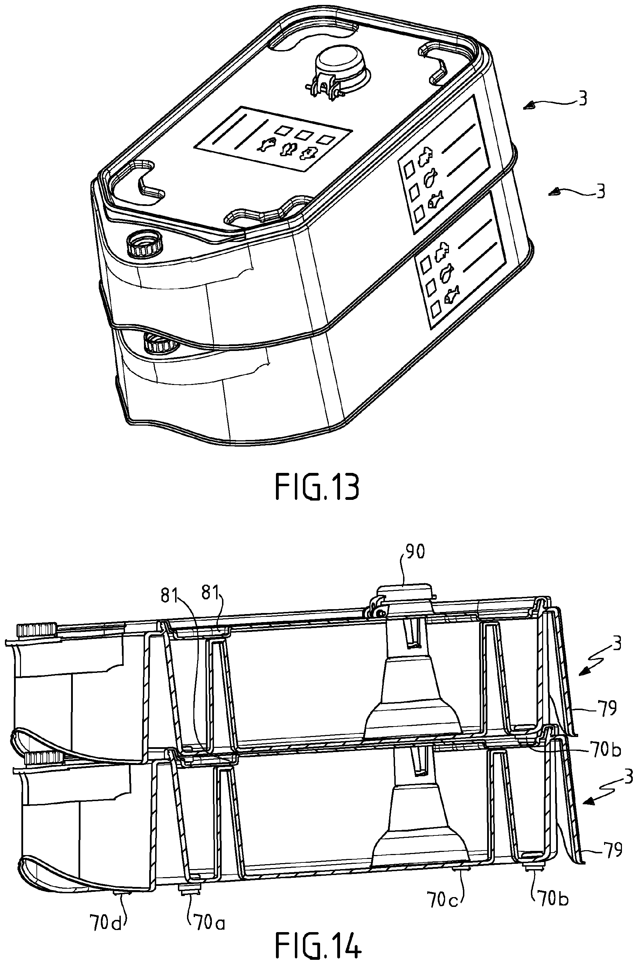

Tel que représenté sur les figures 13 à 15, deux socles de vidange 3 peuvent être superposés. Les butées latérales 81 sont configurées pour limiter les mouvements latéraux du réceptacle de vidange 70 reposant sur le couvercle de réceptacle 80 en configuration d'empilement. Les pieds de réceptacle 70a, 70b, 70c, 70d sont configurés pour reposer sur le couvercle de réceptacle 80 lorsque le réceptacle de vidange 70 et le couvercle de réceptacle 80 occupent la configuration d'empilement. Plus particulièrement, les pieds de réceptacle 70a, 70b, 70c, 70d reposent dans les dépressions 82a, 82b, 82c, 82d lorsque le réceptacle de vidange 70 et le couvercle de réceptacle 80 occupent la configuration d'empilement. Les appuis supérieurs 72a, 72b, 72c, 72d s'étendent sous le couvercle de réceptacle 80 lorsque le couvercle de réceptacle 80 ferme le réceptacle de vidange 70. Plus particulièrement, les appuis supérieurs 72a, 72b, 72c, 72d sont agencés en dessous des dépressions 82a, 82b, 82c, 82d. La paroi périphérique extérieure 79 s'étend autour du couvercle de réceptacle 80 lorsque le réceptacle de vidange 70 et le couvercle de réceptacle 80 occupent la configuration d'empilement.

L'ensemble de cuisson 1 illustré sur les figures s'utilise de la manière suivante. Pour effectuer une vidange d'un bain de cuisson contenu dans la cuve 10, l'utilisateur positionne l'appareil électrique de cuisson 2 sur le réceptacle de vidange 70. Les zones de support 6a, 6b, 6c, 6d reposent sur les appuis supérieurs 72a, 72b, 72c, 72d du réceptacle de vidange 70. L'organe de commande 4 déplace le clapet 61 en position ouverte. La paroi latérale 75 permet de stabiliser l'appareil électrique de cuisson 2 sur le réceptacle de vidange 70. Lorsque la vidange du bain de cuisson a été effectuée, l'utilisateur peut retirer l'appareil électrique de cuisson 2 et remettre le couvercle de réceptacle 80 sur le réceptacle de vidange 70, avec le bouchon de couvercle 90 en place sur le couvercle de réceptacle 80 pour conserver le bain de cuisson avant une nouvelle utilisation.

Diverses modifications et/ou améliorations évidentes pour l'homme du métier peuvent être apportées au mode de réalisation de l'invention décrit dans la présente description tant que cela ne sort pas du cadre de l'invention défini par les revendications.

## Revendications

1. Ensemble de cuisson (1) comprenant un appareil électrique de cuisson (2) et un réceptacle de vidange (70), l'appareil électrique de cuisson (2) comportant une cuve (10) apte à recevoir un bain de cuisson, la cuve (10) étant munie d'un dispositif de vidange (60) comprenant un clapet (61) susceptible d'occuper une position de rappel stable fermée et une position ouverte, le réceptacle de vidange (70) présentant un organe de commande (4), l'ensemble de cuisson (1) présentant une configuration de vidange dans laquelle le réceptacle de vidange (70) porte l'appareil électrique de cuisson (2) et dans laquelle l'organe de commande (4) déplace le clapet (61) en position ouverte, **caractérisé en ce que** le réceptacle de vidange (70) comporte des appuis supérieurs (72a, 72b, 72c, 72d) appartenant à des piliers (71a, 71b, 71c, 71d) issus d'une paroi latérale (75) du réceptacle de vidange (70) et **en ce que** l'appareil électrique de cuisson (2) repose sur les appuis supérieurs (72a, 72b, 72c, 72d) lorsque l'ensemble de cuisson (1) présente la configuration de vidange.

2. Ensemble de cuisson (1) selon la revendication 1, **caractérisé en ce que** le réceptacle de vidange (70) présente un fond de réceptacle (73) et **en ce que** chacun des appuis supérieurs (72a, 72b, 72c, 72d) est issu du fond de réceptacle (73).

3. Ensemble de cuisson (1) selon l'une des revendications 1 ou 2, **caractérisé en ce que** le réceptacle de vidange (70) présente deux côtés (76a, 76b) opposés et **en ce qu'**au moins certains des piliers (71a, 71b, 71c, 71d) sont issus de l'un des côtés (76a, 76b) opposés.

4. Ensemble de cuisson (1) selon la revendication 3, **caractérisé en ce que** tous les piliers (71a, 71b, 71c, 71d) sont issus des côtés (76a, 76b) opposés.

5. Ensemble de cuisson (1) selon l'une des revendications 3 ou 4, **caractérisé en ce que** le réceptacle de vidange (70) présente une configuration allongée selon une direction et **en ce que** les deux côtés (76a, 76b) opposés s'étendent selon ladite direction.

6. Ensemble de cuisson (1) selon l'une des revendications 1 à 5, **caractérisé en ce que** l'appareil électrique de cuisson (2) présente des appuis inférieurs (5a, 5b, 5c, 5d) espacés les uns des autres et configurés pour reposer sur un plan d'appui.

7. Ensemble de cuisson (1) selon la revendication 6, **caractérisé en ce que** l'appareil électrique de cuisson (2) présente des zones de support (6a, 6b, 6c, 6d) reposant sur les appuis supérieurs (72a, 72b, 72c, 72d) lorsque l'ensemble de cuisson (1) présente la configuration de vidange, et **en ce que** les zones de support (6a, 6b, 6c, 6d) sont distinctes des appuis inférieurs (5a, 5b, 5c, 5d).

8. Ensemble de cuisson (1) selon la revendication 7, **caractérisé en ce que** lorsque les appuis inférieurs (5a, 5b, 5c, 5d) reposent sur un plan d'appui, les zones de support (6a, 6b, 6c, 6d) s'étendent à distance dudit plan d'appui.

9. Ensemble de cuisson (1) selon l'une des revendications 1 à 8, **caractérisé en ce que** l'appareil électrique de cuisson (2) comporte un boîtier extérieur (30) logeant la cuve (10) et **en ce que** le boîtier extérieur (30) repose sur le réceptacle de vidange (70) lorsque l'ensemble de cuisson (1) présente la configuration de vidange.

10. Ensemble de cuisson (1) selon la revendication 9, **caractérisé en ce que** le boîtier extérieur (30) forme une jupe (32).

11. Ensemble de cuisson (1) selon les revendications 6 et 10, **caractérisé en ce que** les appuis inférieurs (5a, 5b, 5c, 5d) sont agencés sous la jupe (32).

12. Ensemble de cuisson (1) selon les revendications 7 et 10, **caractérisé en ce que** les zones de support (6a, 6b, 6c, 6d) sont agencées sous la jupe (32).

## Patentansprüche

1. Kochanordnung (1), die ein elektrisches Kochgerät (2) und einen Ablaufbehälter (70) umfasst, wobei das elektrische Kochgerät (2) einen Kochtopf (10) aufweist, der geeignet ist, um ein Kochbad aufzunehmen, wobei der Kochtopf (10) mit einer Ablaufvorrichtung (60) versehen ist, die eine Klappe (61) umfasst, die geeignet ist, um eine geschlossene stabile Rückholposition und eine offene Position einzunehmen, wobei der Ablaufbehälter (70) ein Steuerelement (4) aufweist, wobei die Kochanordnung (1) eine Ablaufkonfiguration aufweist, in welcher der Ablaufbehälter (70) das elektrische Kochgerät (2) trägt und in welcher das Steuerelement (4) die Klappe (61) in die offene Position verschiebt, **dadurch gekennzeichnet, dass** der Ablaufbehälter (70) obere Auflagen (72a, 72b, 72c, 72d) aufweist, die zu Stützen (71a, 71b, 71c, 71d) gehören, die von einer seitlichen Wand (75) des Ablaufbehälters (70) ausgehen, und dass das elektrische Kochgerät (2) auf den oberen Auflagen (72a, 72b, 72c, 72d) ruht, wenn die Kochanordnung (1) die Ablaufkonfiguration aufweist.

2. Kochanordnung (1) nach Anspruch 1, **dadurch gekennzeichnet, dass** der Ablaufbehälter (70) einen Behälterboden (73) aufweist und dass jede der oberen Auflagen (72a, 72b, 72c, 72d) aus dem Behälterboden (73) ausgeht.

3. Kochanordnung (1) nach einem der Ansprüche 1 oder 2, **dadurch gekennzeichnet, dass** der Ablaufbehälter (70) zwei gegenüberliegende Seiten (76a, 76b) aufweist und dass zumindest einige der Stützen (71a, 71b, 71c, 71d) von einer der gegenüberliegenden Seiten (76a, 76b) ausgehen.

4. Kochanordnung (1) nach Anspruch 3, **dadurch gekennzeichnet, dass** alle Stützen (71a, 71b, 71c, 71d) von den gegenüberliegenden Seiten (76a, 76b) ausgehen.

5. Kochanordnung (1) nach einem der Ansprüche 3 oder 4, **dadurch gekennzeichnet, dass** der Ablaufbehälter (70) eine längliche Konfiguration in einer Richtung aufweist und dass sich die beiden gegenüberliegenden Seiten (76a, 76b) in dieser Richtung erstrecken.

6. Kochanordnung (1) nach einem der Ansprüche 1 bis 5, **dadurch gekennzeichnet, dass** das elektrische Kochgerät (2) untere Auflagen (5a, 5b, 5c, 5d) aufweist, die voneinander beabstandet und konfiguriert sind, um auf einer Auflageebene zu ruhen.

7. Kochanordnung (1) nach Anspruch 6, **dadurch gekennzeichnet, dass** das elektrische Kochgerät (2) Stützzonen (6a, 6b, 6c, 6d) aufweist, die auf den oberen Auflagen (72a, 72b, 72c, 72d) ruhen, wenn die Kochanordnung (1) die Ablaufkonfiguration aufweist, und dass sich die Stützzonen (6a, 6b, 6c, 6d) von den unteren Auflagen (5a, 5b, 5c, 5d) unterscheiden.

8. Kochanordnung (1) nach Anspruch 7, **dadurch gekennzeichnet, dass**, wenn die unteren Auflagen (5a, 5b, 5c, 5d) auf einer Auflageebene ruhen, sich die Stützzonen (6a, 6b, 6c, 6d) im Abstand von der Auflageebene erstrecken.

9. Kochanordnung (1) nach einem der Ansprüche 1 bis 8, **dadurch gekennzeichnet, dass** das elektrische Kochgerät (2) ein Außengehäuse (30) aufweist, das den Kochtopf (10) aufnimmt, und dass das Außengehäuse (30) auf dem Ablaufbehälter (70) ruht, wenn die Kochanordnung (1) die Ablaufkonfiguration aufweist.

10. Kochanordnung (1) nach Anspruch 9, **dadurch gekennzeichnet, dass** das Außengehäuse (30) eine Schürze (32) bildet.

11. Kochanordnung (1) nach den Ansprüchen 6 und 10, **dadurch gekennzeichnet, dass** die unteren Auflagen (5a, 5b, 5c, 5d) unter der Schürze (32) angeordnet sind.

12. Kochanordnung (1) nach den Ansprüchen 7 und 10, **dadurch gekennzeichnet, dass** die Stützzonen (6a, 6b, 6c, 6d) unter der Schürze (32) angeordnet sind.

## Claims

1. Cooking assembly (1) which comprises an electrical cooking appliance (2) and a draining receptacle (70), the electrical cooking appliance (2) comprising a vessel (10) capable of receiving a cooking bath, the vessel (10) provided with a draining device (60) that has a valve (61) which can occupy a closed stable return position and an open position, the draining receptacle (70) having a control member (4), the cooking assembly (1) having a draining configuration in which the draining receptacle (70) supports the electrical cooking appliance (2) and in which the control member (4) moves the valve (61) into the open position, **characterised in that** the draining receptacle (70) comprises upper supports (72a, 72b, 72c, 72d) that are part of pillars (71a, 71b, 71c, 71d) which project from a side wall (75) of the draining receptacle (70) and **in that** the electrical cooking appliance (2) rests on the upper supports (72a, 72b, 72c, 72d) when the cooking assembly (1) is in the draining configuration.

2. Cooking assembly (1) according to claim 1, **characterised in that** the draining receptacle (70) has a receptacle bottom (73) and **in that** each of the upper supports (72a, 72b, 72c, 72d) projects from the receptacle bottom (73).

3. Cooking assembly (1) according to one of claims 1 or 2, **characterised in that** the draining receptacle (70) has two opposite sides (76a, 76b) and **in that** at least some of the pillars (71a, 71b, 71c, 71d) project from one of the opposite sides (76a, 76b).

4. Cooking assembly (1) according to claim 3, **characterised in that** all the pillars (71a, 71b, 71c, 71d) project from the opposite sides (76a, 76b).

5. Cooking assembly (1) according to one of claims 3 or 4, **characterised in that** the draining receptacle (70) has an extended configuration in a direction and **in that** the two opposite sides (76a, 76b) extend in said direction.

6. Cooking assembly (1) according to one of claims 1 to 5, **characterised in that** the electrical cooking appliance (2) has lower supports (5a, 5b, 5c, 5d) spaced from one another and configured to rest on a support plane.

7. Cooking assembly (1) according to claim 6, **characterised in that** the electrical cooking appliance (2) has support zones (6a, 6b, 6c, 6d) resting on the upper supports (72a, 72b, 72c, 72d) when the cooking assembly (1) has the draining configuration, and **in that** the support zones (6a, 6b, 6c, 6d) are distinct from the lower supports (5a, 5b, 5c, 5d).

8. Cooking assembly (1) according to claim 7, **characterised in that** when the lower supports (5a, 5b, 5c, 5d) rest on a support plane, the support zones (6a, 6b, 6c, 6d) extend at a distance from said support plane.

9. Cooking assembly (1) according to one of claims 1 to 8, **characterised in that** the electrical cooking appliance (2) comprises an outer casing (30) housing the vessel (10) and **in that** the outer casing (30) rests on the draining receptacle (70) when the cooking assembly (1) is in the draining configuration.

10. Cooking assembly (1) according to claim 9, **characterised in that** the outer casing (30) forms a skirt (32).

11. Cooking assembly (1) according to claims 6 and 10, **characterised in that** the lower supports (5a, 5b, 5c, 5d) are arranged under the skirt (32).

12. Cooking assembly (1) according to claims 7 and 10, **characterised in that** the support zones (6a, 6b, 6c, 6d) are arranged under the skirt (32).
